# EUROPÄISCHE PATENTANMELDUNG

(11) **EP 0 707 145 A1**
(43) Veröffentlichungstag der Anmeldung: **17.04.1996**
(21) Anmeldenummer: 95116002.7
(22) Anmeldetag: 11.10.1995
(51) Int. Cl.: F03D 11/00, H02G 13/00

(54) **Windkraftanlage mit Blitzschutz**

(30) Priorität: 11.10.1994 DE 4436290
(71) Anmelder: AUTOFLUG ENERGIETECHNIK GmbH + CO., D-25462 Rellingen (DE)
(72) Erfinder: Böhmeke, Georg, D 24768 Rendsburg (DE)
(74) Vertreter: Müller, Karl-Ernst, Dr.

(57) **Zusammenfassung**

Für eine Windkraftanlage mit einem turmartigen Ständer, der einen mit Rotorblättern versehenen Rotor und einen von diesem angetriebenen Generator trägt, soll eine geeignete Blitzschutzeinrichtung angegeben werden. Hierzu ist vorgesehen, daß zur Einrichtung eines Blitzschutzes an dem Ständer (10) ein in eine Kontaktstellung mit einem in eine zum Ständer (10) parallele Lage gebrachten Rotorblatt (13) bringbarer und über den Ständer (10) geerdeter Stromabnehmer (15, 23, 24) angeordnet ist.

## Beschreibung

Die Erfindung betrifft eine Windkraftanlage mit einem turmartigen Ständer, der einen mit Rotorblättern versehenen Rotor und einen von diesem angetriebenen Generator trägt.

Bei durch Benutzung bekanntgewordenen Windkraftanlagen der vorgenannten Art besteht das Problem der Sicherung gegen Blitzeinschlag, da die Windkraftanlagen meist in flachem Gelände aufgestellt sind sowie aufgrund ihrer Höhe umliegende Baulichkeiten oder auch natürliche Erhebungen wie Bäume oder dergleichen überragen und daher gegen Blitzeinschlag besonders anfällig sind. Die Anfälligkeit gegen Blitzeinschlag wird noch dadurch vergrößert, daß über die Bauhöhe des Ständers an sich hinaus die Gesamthöhe der Windkraftanlage noch nahezu verdoppelt wird durch die umlaufenden Rotorblätter, die besonders an ihren äußersten Spitzen besondere Anziehungspunkte für eine Blitzentladung ausbilden. Der mit einem Blitzeinschlag verbundene Schaden liegt dann nicht nur in der notwendigen Reparatur der gegebenenfalls durch Blitzeinschlag zerstörten Teile, wie insbesondere Rotorblätter, sondern in dem oft über einen längeren Zeitraum andauernden völligen Betriebsausfall der betreffenden Windkraftanlage.

Der Erfindung liegt daher die Aufgabe zugrunde, für eine Windkraftanlage der eingangs genannten Art eine wirksame Blitzschutzeinrichtung anzugeben.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß zur Einrichtung eines Blitzschutzes an dem Ständer ein in eine Kontaktstellung mit einem in eine zum Ständer parallele Lage gebrachten Rotorblatt bringbarer und über den Ständer geerdeten Stromabnehmer angeordnet ist.

Mit der Erfindung ist der Vorteil verbunden, daß die Gefährdung der Windkraftanlage durch Blitzeinschlag vermindert ist, weil der im Auslösefall stillgesetzte Rotor mit einem Rotorblatt in Kontakt mit dem zugeordneten Stromabnehmer steht, so daß der Blitzstrom eines gegebenenfalls in den Rotor einschlagenden Blitzes über den Stromabnehmer abgeleitet und dadurch von den empfindlichen Teilen der Windkraftanlage wie Maschinenhaus und Rotorlagerung weitgehend ferngehalten wird. Die zur Auslösung der Blitzschutzeinrichtung vorgesehenen beziehungsweise notwendigen Gewittermelder sind bereits bekannt und verfügbar, und sie werden schon zur präventiven Aus- und Umschaltung von gefährdeten Anlagen im allgemeinen eingesetzt; diese Gewittermelder können entweder zentral und an anderer Stelle aufgestellt oder aber nach einem Ausführungsbeispiel der Erfindung auch in der jeweiligen Windkraftanlage selbst angeordnet sein. Ergibt also die von einem Gewittermelder vorgenommene Beobachtung und Datenauswertung eine Gefährdungslage für die betreffende Windkraftanlage, so wird der Rotor der Windkraftanlage in einer Stellung stillgesetzt, in welcher der Rotor in direkten oder indirekten Kontakt mit einem vorzugsweise ausfahrbar und damit in entsprechenden Kontakt mit dem Rotorblatt bringbaren Stromabnehmer gelangt, so daß der Blitzstrom über den geerdeten Stromabnehmer abfließen kann.

Nach einem Ausführungsbeispiel der Erfindung ist vorgesehen, daß die Rotorblätter des Rotors an ihren äußeren Spitzen jeweils mit einer Kappe aus einem elektrisch leitenden Material versehen sind, mit welchen der Stromabnehmer im Auslösefall einen direkten oder indirekten Kontakt herstellt. Nach einem Ausführungsbeispiel der Erfindung sind die einzelnen Kappen der Rotorblätter über Leiterbahnen aus einem elektrisch leitenden Material, vorzugsweise aus Kupfergewebe, untereinander verbunden, wobei nach einem Ausführungsbeispiel der Erfindung zu der metallischen Nabe der Windkraftanlage eine weitere Verbindung über zugeordnete Widerstandsbänder hergestellt werden kann. Bei einer direkten Kontaktierung zwischen Stromabnehmer und Rotorblattspitze fließt der Blitzstrom bei einem direkten Blitzeinschlag in das obere der beiden festgesetzten Rotorblätter sowohl über das erste Rotorblatt, das Widerstandsband, das Lager und den Ständer als auch über das erste und zweite jeweils miteinander verbundene Rotorblatt und den Stromabnehmer zur Erde ab. Zur Herstellung einer indirekten Kontaktierung ist zwischen dem leitfähigen Stromabnehmer und der leitfähigen Rotorblattspitze ein gasförmiger oder fester Insolierstoff angeordnet, und in diesem fließt der Blitzstrom ebenfalls über das erste Rotorblatt, das Widerstandsband, das Lager und den Ständer zur Erde ab. Hierbei baut sich aufgrund des hohen induktiven Widerstandes der Strombahn eine solch große Spannung zwischen der Spitze des nach unten gerichteten Rotorblattes und dem am Ständer angebrachten Stromabnehmer auf, daß ein Überschlag am Stromabnehmer zur Rotor auftritt und auch hier ein paralleler Strompfad entsteht. Der leicht erhöhte Widerstand auf dem Wege über das Kupfergewebe, die Widerstandsbänder, Lager und Ständer der Windkraftanlage begünstigt jedoch den leichteren Stromfluß über das Rotorblatt und den Stromabnehmer, so daß der Blitzstrom größtenteils über den vorgegebenen Ableitweg abfließt.

Nach einem Ausführungsbeispiel der Erfindung ist vorgesehen, daß eine Einrichtung zum Bremsen und Festlegen des Rotors im Auslösefall in die dem Stromabnehmer zugeordnete Stellung vorgesehen ist. Dies ist insbesondere dann gegeben, wenn die Windkraftanlage mit einem in die Windrichtung beispielsweise über einen Azimutantrieb nachführbaren Maschinenhaus ausgerüstet ist; in einem solchen Fall kann über den Azimutantrieb der Rotor dann in eine Lage gebracht werden, in welcher der Stromabnehmer mit dem Rotorblatt in Kontakt treten kann, wobei der Rotor beispielsweise einer zweiflügeligen Windkraftanlage in eine exakt senkrechte Position gebracht und dort arretiert wird.

Soweit bei einer Windkraftanlage die Lagerung des Rotors über eine Pendelnabe verwirklicht ist, ist nach einem Ausführungsbeispiel der Erfindung vorgesehen, daß der Rotor über eine Einrichtung in eine Lage kippbar und in dieser Lage arretierbar ist, in welcher das vor dem Ständer liegende Rotorblatt des Rotors den geringstmöglichen Abstand zum Ständer und damit zum Stromabnehmer aufweist.

Nach einem Ausführungsbeispiel der Erfindung kann der Stromabnehmer als ein zur Achse des Ständers klappbar eingerichteter Arm ausgebildet sein, wobei diese Ausführungsform voraussetzt, daß der Rotor der Windkraftanlage im Auslösefall aktiv in eine auf den klappbaren Stromabnehmerarm bezogene Lage überführt werden kann.

Nach einem Ausführungsbeispiel der Erfindung ist vorgesehen, daß der Stromabnehmerarm über einen Hilfsantrieb um die Achse des Ständers drehbar ist; damit wird dem Umstand Rechnung getragen, daß je nach Atmosphärik keine ausreichende Stromstärke mehr zur Verfügung steht, um den Rotor in seine zugeordnete Lage zum Stromabnehmerarm zu bringen; in diesem Fall kann dann der Arm über einen Hilfsantrieb in die zugeordnete Stellung zum Rotorblatt nachdrehbar sein, wobei die dafür erforderliche, wesentlich geringere Energie über eine Batterie vorgehalten werden kann.

Nach einem alternativen Ausführungsbeispiel der Erfindung ist vorgesehen, daß der Stromabnehmer als ein den Ständer umgebener Ring ausgebildet ist, wobei dieser Ring auch feststehend ausgebildet sein kann, der in einem möglichst geringen Abstand zu dem umlaufenden Rotorblatt steht. Es ist dabei davon auszugehen, daß der Blitzstrom einen geringen Abstand zwischen dem stillgesetzten Rotorblatt und dem feststehenden Ring überbrückt.

Vorzugsweise besteht aber der als Stromabnehmer dienende Ring aus mehreren einzelnen Segmenten, die zur Achse des Ständers beweglich angeordnet sind, so daß die Segmente entsprechend der Stellung des Rotors in eine Kontaktlage mit dem stillgesetzten Rotorblatt gebracht werden können; diese Ausbildung eignet sich insbesondere für Ausführungsformen einer Windkraftanlage, bei denen der Rotor aktiv nicht gedreht werden kann.

Zur Verbesserung der Ableitung des Blitzstromes kann nach einem Ausführungsbeispiel der Erfindung vorgesehen sein, daß zwischen dem Rotorblatt und dem Stromabnehmer ein direkter Berührungskontakt besteht; so kann der Stromabnehmer in seinem mit den zugeordneten Rotorblatt in Kontakt kommenden Bereich mit einer Bürste aus einem elektrisch leitenden Material versehen sein, womit Toleranzen bei der Zuordnung der Bauteile zueinander ausgeglichen werden können; auch die Anordnung einer Kohleplatte ist möglich.

Alternativ kann nach einem Ausführungsbeispiel der Erfindung auch vorgesehen sein, daß zwischen dem Rotorblatt und dem Stromabnehmer ein indirekter Kontakt zur Blitzstromableitung eingerichtet ist; in diesem Fall wird eine Funkenstrecke oder eine Gleitentladungsstrecke dadurch ausgebildet, daß zwischen dem leitfähigen Stromabnehmer und der leitfähigen Rotorblattspitze ein gasförmiger oder ein fester Isolierstoff angeordnet ist.

In der Zeichnung sind Ausführungsbeispiele der Erfindung wiedergegeben, die nachstehend beschrieben sind. Es zeigen:
- Fig. 1:: eine Windkraftanlage mit einem zweiflügeliegem Rotor und Blitzschutzeinrichtung,
- Fig. 2:: in einer vergrößerten Darstellung den Stromabnehmer gemäß Figur 1,
- Fig. 3:: in einer vergrößerten Darstellung die Pendelnabenarretierung des Rotors gemäß Figur 1,
- Fig. 4:: eine vergrößerte ausschnittsweise Darstellung des Rotorblatts gemäß Figur 1
- Fig. 5:: eine Windkraftanlage mit Stromabnehmer in einer anderen Ausführungsform,
- Fig. 6:: ein weiteres Ausführungsbeispiel des Stromabnehmers bei einer Windkraftanlage,
- Fig. 7:: den Gegenstand der Figur 6 in einer Draufsicht.

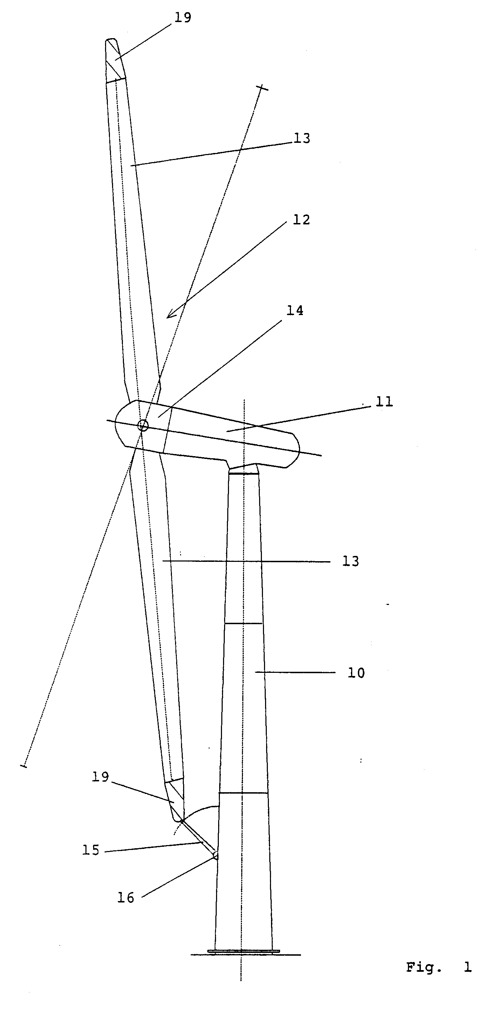

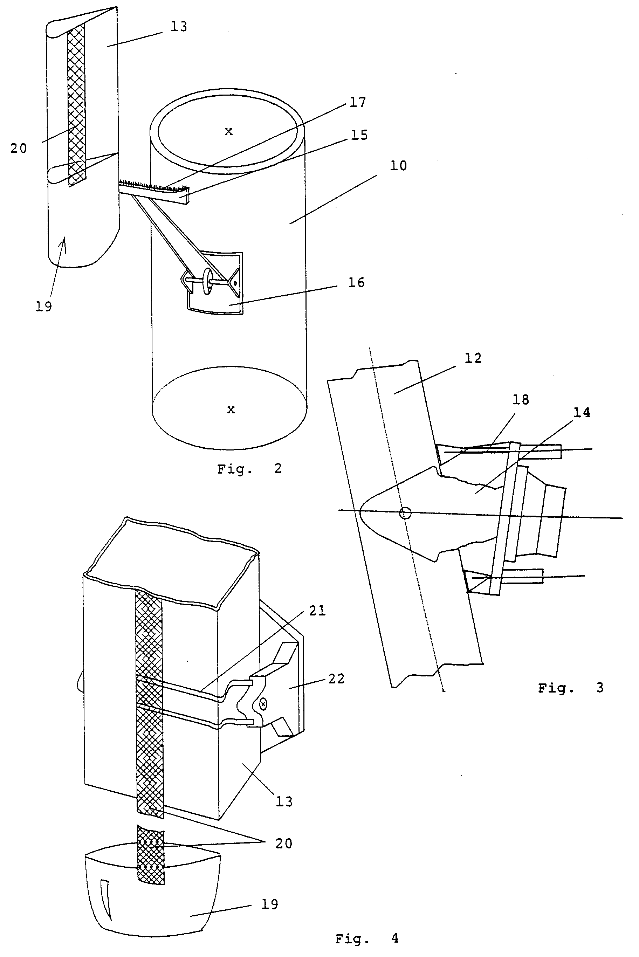

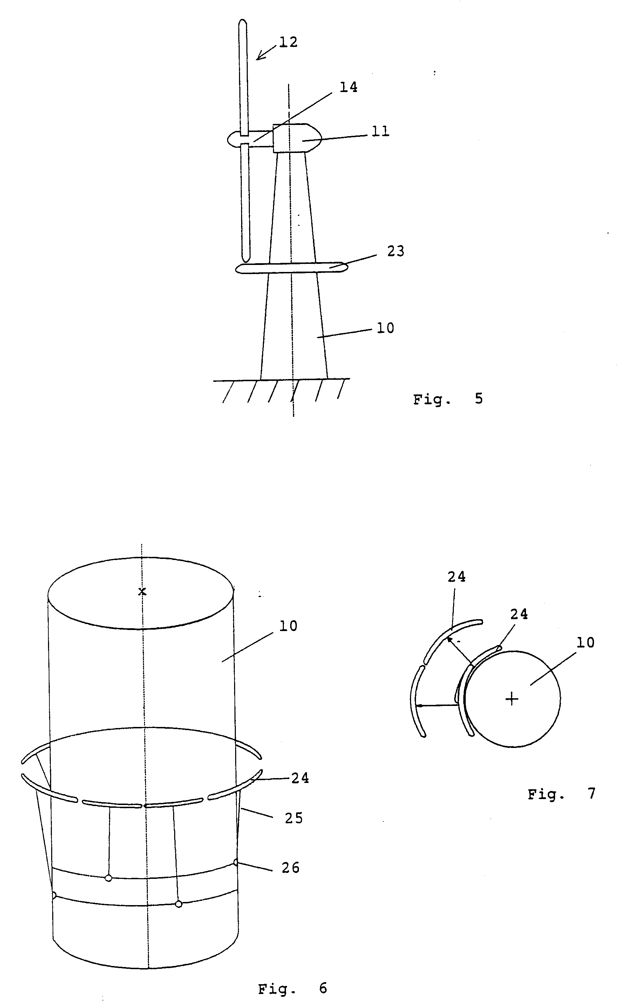

In Figur 1 ist eine Windkraftanlage in sehr vereinfachter, schematischer Darstellung wiedergegeben; dabei ist mit 10 ein turmartiger Ständer bezeichnet, der als Gittergerüst oder auch als massive Säule ausgebildet sein kann. Auf den Ständer 10 ist aufgesetzt ein Maschinenhaus 11 zur Aufnahme eines Generators, der von einem Rotor 12 mit zwei Rotorblättern 13 angetrieben wird. Der Rotor 12 ist mittels einer sogenannten Pendelnabe 14 gelagert, die Ausweichbewegungen des Rotors 12 ermöglicht, wobei in Figur 1 die andere mögliche Extremlage des Rotors gestrichelt angedeutet ist. Wie aus Figur 1 ersichtlich, ist an dem Ständer 10 ein Stromabnehmerarm 15 über ein Gelenk 16 klappbar angeordnet, wobei der im Auslösefall von dem Ständer 10 weggeklappte Stromabnehmerarm 15 mit dem zugeordneten Rotorblatt 13 des Rotors 12 in Kontakt bringbar ist, indem der Rotor 12 über im einzelnen aus Figur 3 ersichtliche Zylinder 18 in eine Lage gekippt und in dieser Lage arretiert ist, in welcher das vor dem Ständer 10 liegende Rotorblatt 13 den geringstmöglichen Abstand zum Ständer 10 und zum Stromabnehmerarm 15 aufweist, so daß in dieser Stellung der Stromabnehmerarm 15 in direkten oder indirekten Kontakt mit dem Ende des Rotorblattes 13 kommt.

Wie aus Figur 2 im einzelnen ersichtlich ist, ist der Stromabnehmerarm 15 an seinem freien und mit dem zugeordneten Rotorblatt 13 in Kontakt kommenden Ende mit einer Bürste 17 vorzugsweise aus Kupferdraht versehen, um den Kontakt zum Rotorblatt 13 betreffend die Ableitung des Blitzstromes zu verbessern und eventuelle Toleranzen auszugleichen; wie nicht weiter dargestellt, kann alternativ auch eine Kohleplatte vorgesehen sein. Ebenfalls nicht dargestellt sind die Möglichkeiten einer indirekten Kontaktierung des Stromabnehmers mit dem metallischen Rotorblattende, bei welcher eine Funkenstrecke oder eine Gleitentladungsstrecke ausgebildet wird.

Wie sich aus Figur 4 entnehmen läßt, sind die äußeren Spitzen der beiden Rotorblätter 13 jeweils mit einer Kappe 19 aus einem elektrisch leitenden Material versehen, wobei die beiden Kappen 19 über längs der Rotorblätter 13 verlaufende Leiterbahnen 20 aus einem elektrisch leitenden Material, vorzugsweise Kupfergewebe, miteinander verbunden sind, so daß ein Blitzstrom eines in das von der Windkraftanlage wegragende Rotorblatt einschlagenden Blitzes bis zum Kontakt des Stromabnehmerarmes 15 mit dem anderen Rotorblatt 13 abfließen kann. Im Bereich der Pendelnabe 14 ist eine blitzstromtragfähige Verbindung zwischen dem Kupfergeflecht und der Nabe herzustellen; in diesem Bereich sind daher von dem den Rotor 12 haltenden Pendelrahmen 22 ausgehende und den Rotor 12 einschließende Widerstandsbänder 21 angeordnet, mittels derer vermieden werden soll, daß der Blitzstrom seinen Weg über die Nabe und den Ständer in die Erdung findet, vielmehr größtenteils über den leitenden Weg der Leiterbahnen 20 und die Kappe 19 zum Stromabnehmerarm 15 geleitet wird.

In Figur 5 ist schematisch ein weiteres Ausführungsbeispiel dargestellt, bei welchem mit einem geringen Abstand zum Rotor 12 beziehungsweise den Rotorblättern 13 ein feststehender Ring 23 als Stromabnehmer angeordnet ist, so daß kein Rückführen des Rotors 12 in eine bestimmte Lage erforderlich ist.

Diese Ausführungsform eignet sich auch für Pendelnaben-Rotoren ohne eine Pendelbremse oder Pendel-Positionierung, weil der Rotor 12 eine beliebige Lage zu dem Ring 23 als Stromabnehmer einnehmen kann.

Aus den Figuren 6 und 7 ergibt sich ein Ausführungsbeispiel, in welchem der Stromabnehmerring durch einzelne Segmente 24 gebildet wird, wobei diese Segmente 24 nun durch Tragarme 25 gehalten sind, die über versetzt angeordnete Gelenkpunkte 26 an dem Ständer 10 sitzen, so daß die einzelnen Segmente 24 des Stromabnehmerringes an den Ständer 10 herangeklappt werden können und in diesem Ruhestand jeweils versetzt zueinander beziehungsweise übereinander anliegen, wie sich dies aus Figur 7 ergibt. Mit dieser Gestaltung ist es möglich, wiederum nach dem Stillsetzen des Rotors 12 einen unmittelbaren, jeweils direkten oder indirekten Kontakt zwischen den Stromabnehmersegmenten 24 und dem zugeordneten Rotorblatt 13 des stillgesetzten Rotors 12 herzustellen.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiendenen Ausführungsformen wesentlich sein.

## Patentansprüche

1. Windkraftanlage mit einem turmartigen Ständer, der einen mit Rotorblättern versehenen Rotor und einen von diesem angetriebenen Generator trägt, dadurch gekennzeichnet, daß zur Einrichtung eines Blitzschutzes an dem Ständer (10) ein in eine Kontaktstellung mit einem in eine zum Ständer (10) parallele Lage gebrachten Rotorblatt (13) bringbarer und über den Ständer (10) geerdeter Stromabnehmer (15, 23, 24) angeordnet ist.

2. Windkraftanlage nach Anspruch 1, dadurch gekennzeichnet, daß die Rotorblätter (13) des Rotors (12) an ihren äußeren Spitzen jeweils mit einer Kappe (19) aus einem elektrisch leitenden Material versehen sind, zu welchen der Stromabnehmer (15, 23, 24) im Auslösefall einen Kontakt herstellt.

3. Windkraftanlage nach Anspruch 2, dadurch gekennzeichnet, daß die Kappen (19) der einzelnen Rotorblätter (13) des Rotors (12) über eine oder mehrere, auch mehrfach verbundene Leiterbahnen (20) aus einem elektrisch leitenden Material untereinander verbunden sind.

4. Windkraftanlage nach Anspruch 3, dadurch gekennzeichnet, daß die Leiterbahnen (20) aus Kupfergewebe bestehen.

5. Windkraftanlage nach Anspruch 3, dadurch gekennzeichnet, daß die Leiterbahnen (20) aus einem flammgespritzten leitenden Material bestehen.

6. Windkraftanlage nach einem der Ansprüche 1 bis 5, dadurch gekennzeichnet, daß zwischen den Leiterbahnen (20) der Rotorblätter (13) und der metallischen Nabe (14) des Rotors (12) blitzstromträgfähige Widerstandsbänder (21) angeordnet sind.

7. Windkraftanlage nach einem der Ansprüche 1 bis 6, dadurch gekennzeichnet, daß eine Einrichtung zum Bremsen und Festlegen des Rotors (12) im Auslösefall in die dem Stromabnehmer (15, 23, 24) zugeordnete Stellung vorgesehen ist.

8. Windkraftanlage nach Anspruch 7 mit einer Pendelnabe als Rotorlagerung, dadurch gekennzeichnet, daß der Rotor (12) über die Einrichtung (18) in eine Lage kippbar und in dieser Lage arretierbar ist, in welcher das vor dem Ständer (10) liegende Rotorblatt (13) den geringstmöglichen Abstand zum Ständer (10) und zum Stromabnehmer (15, 23, 24) aufweist.

9. Windkraftanlage nach einem der Ansprüche 1 bis 8, dadurch gekennzeichnet, daß der Stromabnehmer als ein zur Achse des Ständers (10) klappbar eingerichteter Arm (15) ausgebildet ist.

10. Windkraftanlage nach Anspruch 9, dadurch gekennzeichnet, daß der Arm (15) über einen Hilfsantrieb um die Achse des Ständers (10) drehbar ist.

11. Windkraftanlage nach einem der Ansprüche 1 bis 8, dadurch gekennzeichnet, daß der Stromabnehmer als ein den Ständer (10) umgebender Ring (23) ausgebildet ist.

12. Windkraftanlage nach Anspruch 11, dadurch gekennzeichnet, daß der Stromabnehmerring in einzelne Segmente (24) unterteilt ist, die zur Achse des Ständers (10) beweglich angeordnet sind.

13. Windkraftanlage nach einem der Ansprüche 1 bis 12, dadurch gekennzeichnet, daß zwischen dem Rotorblatt (13) und dem Stromabnehmer (15, 23, 24) ein direkter Berührungskontakt besteht.

14. Windkraftanlage nach Anspruch 13, dadurch gekennzeichnet, daß der Stromabnehmer (15, 23, 24) in seinem mit dem zugeordneten Rotorblatt (13) in Kontakt kommenden Bereich mit einer Bürste (17) aus einem elektrisch leitenden Material versehen ist.

15. Windkraftanlage nach Anspruch 13, dadurch gekennzeichnet, daß der Stromabnehmer (15, 23, 24) in seinem mit dem zugeordneten Rotorblatt (13) in Kontakt kommenden Bereich mit einer Kohleplatte versehen ist.

16. Windkraftanlage nach einem der Ansprüche 1 bis 12, dadurch gekennzeichnet, daß zwischen dem Rotorblatt (13) und dem Stromabnehmer (15, 23, 24) ein indirekter Kontakt zur Blitzstromableitung eingerichtet ist.

17. Windkraftanlage nach Anspruch 16, dadurch gekennzeichnet, daß der Bereich zwischen dem Stromabnehmer (15, 23, 24) und dem Rotorblatt (13) in dessen Stillstand als Funkenstrecke ausgebildet ist.

18. Windkraftanlage nach Anspruch 16, dadurch gekennzeichnet, daß der Bereich zwischen dem Stromabnehmer (15, 23, 24) und dem Rotorblatt (13) in dessen Stillstand als Gleitentladungsstrecke ausgebildet ist.

19. Windkraftanlage nach einem der Ansprüche 1 bis 18, dadurch gekennzeichnet, daß die Windkraftanlage mit einem elektronischen Gewitterwarngerät ausgerüstet ist.
